# EUROPEAN PATENT SPECIFICATION

(11) **EP 0 582 614 B1**
(45) Date of publication and mention of the grant of the patent: **25.09.1996**
(21) Application number: 92909267.4
(22) Date of filing: 28.04.1992
(51) Int. Cl.: C08J 9/00, C08J 3/00, E01C 13/00

(54) **POLYMERIC COMPOSITIONS**
POLYMERE ZUSAMMENSETZUNGEN
COMPOSITIONS DE POLYMERE

(30) Priority: 02.05.1991 GB 91095364
(43) Date of publication of application: 16.02.1994
(73) Proprietor: BOWERS, Frank, Nicosia (CY); BOWERS, Jacqueline Mary, Nicosia (CY)
(72) Inventor: BROWERS, Frank, Melton, Mowbray, Leicestershire LE14 3DT (GB)
(74) Representative: Lawrence, John Gordon
(86) International application number: GB9200782
(87) International publication number: WO9219669

(56) References cited:
- EP-A- 0 165 895
- WO-A-91/06594
- DE-A- 2 110 327
- DE-B- 1 658 488
- US-A- 4 107 100

## Description

This invention concerns methods and materials for the production of polymeric compositions, particularly, though by no means exclusively, suitable for use in the formation of impact absorbing surfaces or substrates to sports or play areas.

Known such impact absorbing surfaces comprise crumbs of a natural or synthetic rubber, such as EPDM for example, in a matrix of polymer, such as polyurethane for example.

The matrix may completely fill the spaces between the crumbs to give a non-porous composition or may simply coat the surfaces of the crumbs to cause them to adhere leaving the interstices between the crumbs void to give a porous product.

Either kind of composition may be laid to form a sports or play surface or to form a substrate to another surface such as that provided by synthetic turf for example.

The compositions are prepared on site immediately before use by mixing crumb, liquid polymer and if necessary a catalyst, to enable them to be laid, in the manner of asphalt, before polymerization has advanced sufficiently to render them unworkable. Advantageously polymerization times are short to reduce the risk of damage to the finished surface before it has set.

The on site preparation and short setting time neccessitates expensive equipment and highly trained operators regardless of the size of the project.

It is an object of the present invention to provide a method and materials for production of a porous composite which overcomes the disadvantage aforesaid.

According to the present invention there is provided a method of producing a porous composite comprising the steps of :-
pre-wetting particulate material with a liquid curing agent medium at a central facility to form a stable intermediate;
transporting the intermediate to site;
forming a shaped mass of the intermediate; and
applying to the intermediate a liquid polymer or pre-polymer, either immediately before or after formation of said mass.

The shaped mass may be a horizontal layer.

The liquid polymer or pre-polymer may be in the form of an emulsion.

The liquid polymer or pre-polymer may include an inhibitor or retarder to give extended shelf life.

The liquid medium may contain a catalyst or a chemical to neutralise any inhibitor or retardant present in the liquid polymer or pre-polymer.

The liquid medium may contain a coupling agent.

The liquid medium may contain a diluent.

The particulate material may be a natural or synthetic rubber crumb.

The intermediate may be mixed with the liquid polymer or pre-polymer for a predetermined short period before formation of the shaped mass.

The mixing may be effected using a conventional cement mixer.

The liquid polymer or pre-polymer may be applied to the shaped mass by spraying or pouring.

The invention also includes compositions for use in practising the methods aforesaid.

The invention will be further apparent from the following description, which concerns, by way of example only, the laying of a running-track in accordance with one method thereof.

In general the invention comprises pre-wetting a rubber crumb with a curing agent to form a stable intermediate, at a central facility. The intermediate is bagged for storage and transport to site.

Onto a suitable sub-base a base coat comprising the intermediate is laid using conventional concrete or asphalt laying techniques and equipment.

An emulsion of polymer or pre-polymer is then sprayed over the crumb surface so as to pass through the interstices of the mix to join the crumbs into a coherent mass. Excess liquid disperses into the sub-base.

In an alternative approach the intermediate is mixed with the polymer or pre-polymer for a predetermined short time using a conventional cement mixer to initiate polymerisation before the mix is laid.

In a specific example SBR waste rubber granules having sizes in the range of 2mm - 6mm are coated with 2% by weight of a liquid medium comprising a hydraulically stable organic polyol containing the polyurethane catalyst dibutyltin mercaptide and a coupling agent (silane). The mixture is bagged for storage and use at a later date. The shelf life of the bagged mixture is greater than 12 months.

A Diphenylmethane -4, 4' Di-Isocyanate based pre-polymer having a free (-NCO) of between 8.5% and 9.5% with a viscosity of between 2800 and 3400 cp is prepared and bottled. The shelf life of pre-polymer is up to 12 months.

When required the bags of pre-wetted rubber granules and bottles of pre-polymer are transported to site.

The pre-wetted granules and pre-polymer are mixed (1 litre of pre-polymer to 40 kg of granules) by tumbling in a conventional cement mixer for between three and five minutes.

The final mixture is then laid onto a prepared sub-base and allowed to polymerise.

Polymerisation time is controlled by adjusting the amount of catalyst pre-mixed with the rubber granules.

Whilst the specific example is concerned with a polyurethane resin system it will be understood that other systems such as epoxy resin systems might be used.

Again, for example, the particulate material may comprise cork crumb, gravel, chipped bark or any other material suited to the intended application.

Yet again, for example, the composition may include fillers, colouring materials or other known additives.

## Claims

1. A method of producing a porous composite comprising the steps of :-
pre-wetting particulate material with a liquid curing agent medium at a central facility to form a stable intermediate;
transporting the intermediate to site;
forming a shaped mass of the intermediate; and
applying to the intermediate a liquid polymer or pre-polymer, either immediately before or after formation of said mass.

2. A method according to claim 1, wherein the shaped mass is a horizontal layer.

3. A method according to claim 1 or claim 2, wherein the liquid polymer or pre-polymer is in the form of an emulsion.

4. A method according to claim 3, wherein the liquid polymer or pre-polymer includes an inhibitor or retarder to give extended shelf life.

5. A method according to any preceding claim, wherein the liquid medium contains a catalyst or a chemical to neutralise any inhibitor or retarder present in the liquid polymer or pre-polymer.

6. A method according to any preceding claim, wherein the liquid medium contains a coupling agent.

7. A method according to any preceding claim wherein the liquid medium contains a diluent.

8. A method according to any preceding claim, wherein the particulate material is a natural or synthetic rubber crumb.

9. A method according to any preceding claim, wherein the intermediate is mixed with the liquid polymer or pre-polymer for a predetermined short period before formation of the shaped mass.

10. A method according to claim 9, wherein the mixing is effected using a conventional cement mixer.

11. A method according to any one of claims 1-8 wherein the liquid polymer or pre-polymer is applied to the shaped mass by spraying or pouring.

12. A method according to any preceding claim, wherein the polymer or pre-polymer is a polyurethane based on Diphenylmethane -4, 4' Di-Isocyanate.

13. Bags of pre-wetted particles and containers of polymer or pre-polymer when used in the method of any of claims 1-12.

## Patentansprüche

1. Verfahren zum Herstellen eines porösen Verbundstoffes, welches die Schritte aufweist:
Vorbefeuchtung partikelförmigen Materials mit einem flüssigen Härtemittelmedium in einer zentralen Einrichtung zur Bildung eines stabilen Zwischenprodukts;
Transportieren des Zwischenprodukts zur Baustelle;
Bilder einer geformten Masse des Zwischenprodukts; und
Zugeben eines flüssigen Polymers oder Vorpolymers zu dem Zwischenprodukt entweder unmittelbar vor oder nach der Bildung der Masse.

2. Verfahren nach Anspruch 1, worin die geformte Masse eine horizontale Schicht ist.

3. Verfahren nach Anspruch 1 oder 2, worin das flüssige Polymer oder Vorpolymer in der Form einer Emulsion ist.

4. Verfahren nach Anspruch 3, worin das flüssige Polymer oder Vorpolymer einen Inhibitor oder ein Verzögerungsmittel enthält, um eine längere Lagerbeständigkeit zu geben.

5. Verfahren nach einem der vorangehenden Ansprüche, worin das flüssige Medium einen Katalysator oder eine Chemikalien enthält, um irgendeinen in dem flüssigen Polymer oder Vorpolymer vorhandenen Inhibitor oder Verzögerer zu neutralisieren.

6. Verfahren nach einem der vorangehenden Ansprüche, worin das flüssige Medium einen Haftvermittler enthält.

7. Verfahren nach einem der vorangehenden Ansprüche, worin das flüssige Medium ein Verdünnungsmittel enthält.

8. Verfahren nach einem der vorangehenden Ansprüche, worin das partikelförmige Material Schnitzel aus natürlichem oder synthetischem Gummi sind.

9. Verfahren nach einem der vorangehenden Ansprüche, worin das Zwischenprodukt mit dem flüssigen Polymer oder Vorpolymer eine vorbestimmte kurze Periode vor der Bildung der geformten Masse vermischt wird.

10. Verfahren nach Anspruch 9, worin das Mischen unter Verwendung eines herkömmlichen Zementmischers bewirkt wird.

11. Verfahren nach einem der Ansprüche 1 bis 8, worin das flüssige Polymer oder Vorpolymer durch Sprühen oder Gießen zu der geformten Masse gegeben wird.

12. Verfahren nach einem der vorangehenden Ansprüche, worin das Polymer oder Vorpolymer ein Polyurethan auf der Grundlage von Diphenylmethan-4, 4'-Di-Isozyanat ist.

13. Säcke von vorbefeuchteten Teilchen und Behälter von Polymer oder Vorpolymer, wenn sie bei dem Verfahren nach einem der Ansprüche 1 bis 12 verwendet werden.

## Revendications

1. Procédé de production de composite poreux comprenant les étapes de :
prémouiller du matériau particulaire avec un milieu agent de réticulation liquide dans une unité centrale pour former un intermédiaire stable ;
transporter l'intermédiaire sur le site ;
former une masse moulée de l'intermédiaire ; et
appliquer à l'intermédiaire un polymère liquide ou un prépolymère soit immédiatement avant, soit après la formation de ladite masse.

2. Procédé selon la revendication 1, où la masse moulée est une couche horizontale.

3. Procédé selon la revendication 1 ou la revendication 2, où le polymère ou prépolymère liquide est sous forme d'une émulsion.

4. Procédé selon la revendication 3, où le polymère ou le prépolymère liquide comprend un inhibiteur ou retardateur pour prolonger la durée de vie de conservation.

5. Procédé selon l'une quelconque des revendications précédentes, où le milieu liquide contient un catalyseur ou un produit chimique pour neutraliser l'inhibiteur ou le retardateur quelconque présent dans le polymère ou prépolymère liquide.

6. Procédé selon l'une quelconque des revendications précédentes, où le milieu liquide contient un agent de couplage.

7. Procédé selon l'une quelconque des revendications précédentes, où le milieu liquide contient un diluant.

8. Procédé selon l'une quelconque des revendications précédentes, où le matériau particulaire est un copeau de caoutchouc naturel ou synthétique.

9. Procédé selon l'une quelconque des revendications précédentes, où on mélange l'intermédiaire avec le polymère ou prépolymère liquide pendant une période courte prédéterminée avant la formation de la masse moulée.

10. Procédé selon la revendication 9, où on réalise le mélange en utilisant un mélangeur à ciment classique.

11. Procédé selon l'une quelconque des revendications 1-8, où le polymère liquide ou prépolymère est appliqué en masse moulée par pulvérisation ou coulage.

12. Procédé selon l'une quelconque des revendications précédentes, où le polymère ou prépolymère est un polyuréthane à base de diphénylméthane-4,4'-diisocyanate.

13. Sacs de particules prémouillées et récipients de polymère ou de prépolymère quand on les utilise selon le procédé de l'une quelconque des revendications 1-12.
